Europäisches Patentamt

European Patent Office

Office européen des brevets

(11) Numéro de publication: **0 364 345**

**A1**

## (12) DEMANDE DE BREVET EUROPEEN

(21) Numéro de dépôt: **89402767.1**

(51) Int. Cl.5: **H04N 5/335**

(22) Date de dépôt: **09.10.89**

(30) Priorité: **11.10.88 FR 8813338**

(43) Date de publication de la demande:
**18.04.90 Bulletin 90/16**

(84) Etats contractants désignés:
**DE GB**

(71) Demandeur: **THOMSON VIDEO EQUIPEMENT**
**17, rue du Petit Albi**
**F-95800 Cergy Saint Christophe(FR)**

(72) Inventeur: **Tichit, Bernard**
**THOMSON-CSF SCPI Cédex 67**
**F-92045 Paris la Défense(FR)**

(74) Mandataire: **Turlèque, Clotilde et al**
**THOMSON-CSF SCPI**
**F-92045 PARIS LA DEFENSE CEDEX 67(FR)**

(54) **Caméra permettant le suivi de mouvements rapides en télévision.**

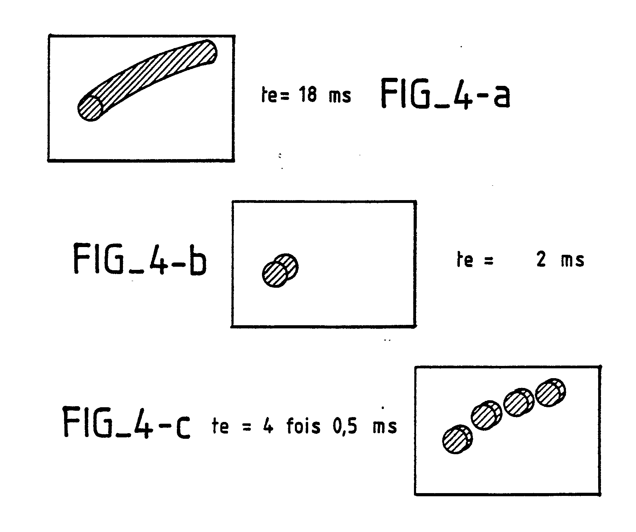

(57) La caméra comporte un système d'obturation (5,2) à une fréquence multiple de la fréquence trame et à temps d'exposition ($t_e$) ajustable mais court (fig.4b). Les images élémentaires résultant des expositions successives durant une même période trame sont superposées sur le capteur à transfert de charge de la caméra 1, lu à la fréquence trame (fig.4c). Les circuits de traitement (6) qui suivent sont classiques.

Application, notamment, aux caméras pour reportages sportifs.

FIG_1

EP 0 364 345 A1

## Caméra permettant le suivi de mouvements rapides en télévision.

L'invention se rapporte au domaine des équipements de télévision, et a plus particulièrement pour objet une caméra permettant le suivi de mouvements rapides.

Les caméras classiques utilisent lors de la prise de vues le mode entrelacé de deux trames par image, de 1/50e de seconde. Le temps d'exposition de chaque ligne ou pixel est donc théoriquement de 1/25e de seconde. Mais dans les caméras à tubes, le spot d'analyse n'est pas assez fin et tout se passe comme si le spot "lisait" deux lignes à la fois, ce qui équivaut à une réduction du temps d'exposition. De plus la couche photoconductrice des tubes de caméra a une certaine rémanence propre, c'est-à-dire que chaque balayage ne décharge pas complètement la cible. Ces deux phénomènes étant contradictoires les caméras à tubes ont des comportements variables suivant la nature de la couche photosensible et la taille du tube d'analyse.

Dans le cas des caméras à transfert de charge, il n'y a pas de rémanence intrinsèque et l'isolement entre pixels est parfait. Le temps d'exposition est donc exactement égal a 1/25e de seconde si on utilise un balayage entrelacé. Dans la pratique ce temps d'exposition est trop long car il en résulte une rémanence inacceptable. Pour éviter cela, le balayage a donc lieu pour deux lignes en même temps, soit pour les lignes un et deux sur la trame impaire, et pour les lignes deux et trois pour la trame paire, ce qui permet d'obtenir effectivement un temps d'exposition de 1/50e de seconde (seule la résolution verticale est réduite) En résumé quel que soit le type de caméra classique utilisée, le temps d'intégration est toujours égal à 1/50e de seconde. Lorsque l'on cherche à enregistrer des mouvements rapides, et que l'on restitue les images correspondantes sur un magnétoscope permettant le ralenti et l'arrêt sur image, on constate que les images individuelles sont floues et ne peuvent être exploitées ; ces images paraissent moins floues à la vitesse du défilement normal. Ce défaut est particulièrement gênant pour les images de reportages sportifs incluant des images de mouvements rapides, surtout lorsque ces images sont examinées image par image ou au ralenti.

Pour remédier à ce défaut, plusieurs solutions ont été envisagées et éventuellement utilisées.

Tout d'abord il a été envisagé de réduire le temps d'exposition en interrompant les rayons lumineux pour n'exposer le capteur qu'une fraction du temps normal. Cette solution est notamment celle utilisée sur les caméras à tubes. Ses résultats sont corrects mais toujours limités par la rémanence des tubes : ainsi, lorsque les images sont examinées une à une, l'image précédente, qui n'a pas été entièrement effacée, apparaît faiblement superposée à l'image principale. Pour les caméras à tubes il n'y a pas d'autre solution disponible et ces caméras étaient donc équipées de disques obturateurs tournants permettant de régler le temps d'exposition de 10 millisecondes à 1 milliseconde.

Les caméras utilisant des capteurs à transfert de charge solides ont apporté une solution nouvelle, impossible avec les tubes : faire varier le temps d'exposition de manière électronique, sans interrompre les rayons lumineux. Pour cela chaque trame est balayée en deux temps : un temps d'exposition utile qui peut être très court -0,5 ms- et le temps restant de la trame, jusqu'à 20 ms, pour la décharge du capteur. Cette solution est largement utilisée, même dans les équipements grand public pour varier le temps d'exposition. Cependant si l'on cherche à reproduire des mouvements rapides, il reste que le nombre d'images, 50 par seconde, n'est pas suffisant. Pour un mouvement rapide pour lequel on choisit un temps d'exposition de 1 ms, les images enregistrées pourront être très nettes, mais 50 images par seconde ne peuvent pas reproduire toutes les phases du mouvement.

Une autre solution consiste donc à augmenter la cadence de 50 images par seconde, mais en sortant des équipements standards de télévision. C'est ainsi qu'un système utilisant une vitesse d'analyse de 180 trames par seconde, soit trois fois la vitesse du NTSC, a été développé. L'inconvénient de ce système est qu'il nécessite le développement d'un magnétoscope spécial trois fois plus rapide que la vitesse normale, et qu'ensuite, il faut convertir les signaux ainsi obtenus en images standard en utilisant plusieurs mémoires de trames. La caméra est également spéciale et utilise des tubes à balayage électrostatique, mais dans lesquels la rémanence des tubes est gênante. Le prix d'un tel ensemble est très élevé et ces équipements sont difficiles à banaliser.

Une caméra, utilisant un capteur solide à transfert de charge, balayée plus rapidement, comme le dernier système décrit ci-dessus permettrait théoriquement d'éliminer la rémanence. Cependant un tel système n'est pas viable car les dispositifs à transfert de charge ne peuvent transférer les charges à un rythme suffisant (trois fois la vitesse normale par exemple). D'autre part les autres éléments de la chaîne magnétoscope, et mémoire de conversion resteraient les mêmes qu'avec un système à tubes et donc constitueraient un ensemble de prix très élevé, difficile à banaliser.

L'invention a pour objet une caméra peu coûteuse, permettant de former des images dans lesquelles le flou généré par des objets en mouvement rapide dans l'image est réduit et qui permet de suivre les mouvements rapides en les décomposant.

Suivant l'invention, une caméra permettant le suivi de mouvements rapides en télévision, est caractérisée en ce qu'elle associe à des éléments conventionnels-objectif, capteur à transfert de charge et circuits de traitement vidéo, un système mécanique d'obturation à une fréquence $nF_T$ multiple de la fréquence trame $F_T$ et à temps d'exposition élémentaire $t_e$ court, le capteur à transfert de charge étant commandé par un signal de commande de lecture à la fréquence trame.

L'invention sera mieux comprise et d'autres caractéristiques apparaîtront à l'aide de la description qui suit en référence aux figures annexées.

La figure 1 est un schéma synoptique de la caméra selon l'invention ;

La figure 2 illustre un exemple d'obturateur à temps d'ouverture variable ;

Les figures 3a et 3b sont des chronogrammes mettant en évidence les temps d'exposition dans les solutions antérieures, et la figure 3c un chronogramme avec le perfectionnement suivant l'invention, en mode prise de vues de mouvements rapides ;

. Les figures 4a, 4b et 4c illustrent les performances de ces systèmes connus et d'une caméra selon l'invention.

La caméra selon l'invention permet de former des images dans lesquelles le flou généré par des objets en mouvement rapide sur un fond stable est supprimé. A cèt effet, elle comporte un capteur à transfert de charge classique complété par un obturateur mécanique permettant d'occulter le capteur, lors de la prise de vue, à une fréquence multiple de la fréquence trame. Le capteur lui, est lu à la fréquence trame. L'image résultante correspond donc à la superposition de plusieurs images élémentaires et permet donc la restitution d'une image dans laquelle le fond stable est semblable à celui obtenu avec un temps d'exposition "normal" correspondant au cumul des temps d'exposition et l'objet en mouvement dans l'image élémentaire est décomposé en n phases, n étant le multiple envisagé.

En effet, une image constituée par exemple de 4 images nettes superposées peut être tout à fait exploitable pour suivre et évaluer le mouvement, surtout si les zones d'images en mouvement rapide ont des surfaces qui ne sont pas très grandes par rapport au fond. Ainsi la sensibilité de la caméra pour les fonds est du même ordre que celle obtenue par une caméra classique, à temps d'exposition égal ; mais bien entendu la sensibilité est moindre pour l'objet en mouvement.

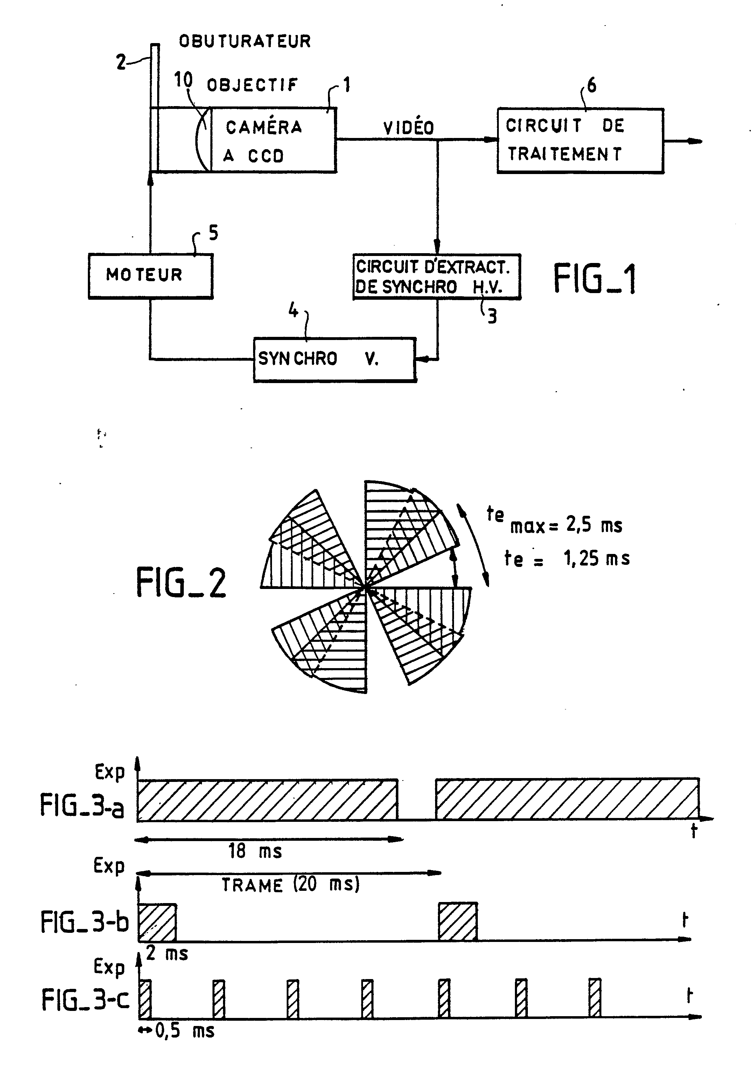

La figure 1 est un schéma synoptique de la caméra suivant l'invention. Elle comporte une caméra vidéo à dispositif à transfert de charge, non rémanente classique, 1, avec son objectif 10. Devant l'objectif est placé un disque obturateur tournant dont la rotation est synchronisée sur le signal de synchronisation verticale (soit 60 Hz en NTSC, 50 Hz en PAL ou SECAM). Pour cela, les signaux de synchronisation (horizontale et verticale) sont extraits de manière classique, dans un circuit d'extraction de synchronisation 3 et la synchro verticale V est prélevée par un circuit 4 qui commande le moteur 5 entraînant le disque obturateur en rotation. L'obturateur tourne à la fréquence trame et est formé par exemple, comme illustré par la figure 2, de deux disques constitués chacun de 4 secteurs de 45° régulièrement espacés. Le réglage de la superposition des deux disques permet alors d'ajuster le temps d'ouverture entre 0 et 2,5 ms dans un système à 50 Hz. Les circuits de traitement 6 du signal vidéo issu du capteur sont alors complètement classiques.

Les figures 3a, 3b et 3c, et 4a, 4b, 4c illustrent de manière comparative deux modes de fonctionnement classiques, et le fonctionnement suivant l'invention :

Dans un premier mode de fonctionnement classique figure 3a, le temps d'exposition $t_e$ est long - 18 ms- presque égal à la durée de la trame, 20 ms par exemple. Un objet en mouvement rapide, une balle qui traverserait l'écran par exemple, donne sur l'image restituée illustrée par la figure 4a un flou sur pratiquement toute la largeur de l'image.

Dans un second mode de fonctionnement classique, le temps d'exposition est réduit, $t_e$ = 2 ms par exemple comme représenté sur la figure 3b, ou moins. L'image résultante, figure 4b montre qu'un objet en mouvement rapide n'est affecté que d'une zone de flou assez réduite. Mais ces images à la fréquence normale ne permettent pas de suivre le mouvement de l'objet.

Le fonctionnement de la caméra suivant l'invention illustré par la figure 3c montre que l'image résulte du transfert, à la fréquence trame des charges superposées résultant de 4 expositions très courtes 0,5 ms par exemple espacées dans une période trame de 20 ms. Ainsi, la sensibilité pour le fond de l'image est la même que celle qui résulte d'une exposition unique de 2 ms, mais l'objet est représenté en quatre endroits différents sur la même image comme représenté sur la figure 4c ; ce qui permet de caractériser le mouvement de l'objet, la caméra ayant pour chaque image élémentaire de l'objet une sensibilité inférieure à celle du fond, mais en même temps le flou de chaque image élémentaire étant très réduit.

L'obturateur 2 ainsi placé devant l'objectif peut avantageusement être débrayable de façon à n'être utilisé que dans le reportages, notamment sportifs, nécessitant une visualisation correcte de mouvements rapides.

## Revendications

1. Caméra permettant le suivi de mouvements rapides en télévision, caractérisée en ce qu'elle associe à des éléments conventionnels-objectif (10), capteur à transfert de charge (1) et circuits de traitement vidéo (6), un système mécanique d'obturation (2, 5) à une fréquence $nF_T$ multiple de la fréquence trame $F_T$ et à temps d'exposition élémentaire $t_e$ court, le capteur à transfert de charge étant commandé par un signal de commande de lecture à la fréquence trame.

2. Caméra selon la revendication 1, caractérisée en ce que le temps d'exposition est ajustable.

3. Caméra selon la revendication 1, caractérisée en ce que le système d'obturation à une fréquence multiple de la fréquence trame est débrayable.

4. Caméra selon l'une quelconque des revendications précédentes caractérisée en ce que le système d'obturation comporte un obturateur (2) tournant commandé par un moteur (5) synchronisé sur le signal de synchronisation verticale extrait du signal vidéo pour effectuer une rotation en une période trame, l'obturateur comportant n secteurs opaques régulièrement espacés.

FIG_1

FIG_2

$te_{max} = 2,5\ ms$
$te = 1,25\ ms$

FIG_3-a

18 ms

TRAME (20 ms)

FIG_3-b

2 ms

FIG_3-c

0,5 ms

te= 18 ms  FIG_4-a

FIG_4-b     te =    2 ms

FIG_4-c  te = 4 fois 0,5 ms

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 608 341 (SONY CORP.)<br>* Page 5, ligne 16 - page 8, ligne 13 *<br>--- | 1,2 | H 04 N 5/335 |
| Y | US-A-4 005 261 (SATO et al.)<br>* Colonne 1, ligne 58 - colonne 2, ligne 21; colonne 2, ligne 47 - colonne 3, ligne 2; colonne 5, ligne 7 - colonne 7, ligne 24 * | 1,2 | |
| A | ---  | 4 | |
| Y | US-A-4 495 415 (KAWABATA)<br>* Colonne 2, ligne 37 - colonne 4, ligne 5 *<br>--- | 1,2 | |
| A | EP-A-0 195 270 (MATSUSHITA ELECTRIC IND. CO.)<br>* Figure 1; colonne 1, ligne 15 - colonne 3, ligne 14 *<br>--- | 1,4 | |
| A | US-A-4 686 572 (TAKATSU)<br>* Colonne 1, ligne 64 - colonne 2, ligne 25; colonne 4, ligne 8 - colonne 6, ligne 28; figure 2 *<br>----- | 1,2,4 | **DOMAINES TECHNIQUES RECHERCHES (Int. Cl.5)**<br><br>H 04 N 5 |

Le présent rapport a été établi pour toutes les revendications

| Lieu de la recherche | Date d'achèvement de la recherche | Examinateur |
|---|---|---|
| LA HAYE | 03-01-1990 | DUHR R.H.J.E. |